# EUROPEAN PATENT APPLICATION

(11) **EP 1 380 876 A1**
(43) Date of publication of application: **14.01.2004**
(21) Application number: 03015462.9
(22) Date of filing: 09.07.2003
(51) Int. Cl.: G02F 1/13357

(54) **Reflecting colour liquid crystal display**

(30) Priority: 11.07.2002 JP 2002203196
(71) Applicant: Kabushiki Kaisha Toyota Jidoshokki, Kariya-shi, Aichi-ken (JP)
(72) Inventor: Kato, Yoshifumi, Kariya-shi, Aichi-ken (JP)
(74) Representative: Vollnhals, Aurel

(57) **Abstract**

A liquid crystal display unit has a liquid crystal panel (1), a plurality of color filter members (7a,7b,7c) and a backlight constituted by an organic electroluminescent device (120). The liquid crystal panel (1) has a plurality of pixels. The color filter members (7a,7b,7c) have different colors for displaying a color image. Each color filter member (7a,7b,7c) is located at a position corresponding to at least one of the pixels. The organic electroluminescent device (120) is located behind the liquid crystal panel (1). The organic electroluminescent device (120) has a plurality of organic electroluminescent bodies (23a,23b,23c). Each organic electroluminescent body (23a,23b,23c) is located opposite to a corresponding color filter member (7a,7b,7c) that has the same color as the color of light emitted from the organic electroluminescent body (23a,23b,23c). Each organic electroluminescent body (23a,23b,23c) emits light toward the corresponding color filter member (7a,7b,7c).

## Description

### BACKGROUND OF THE INVENTION

The present invention relates to a transmissive liquid crystal display unit that employs an organic electroluminescent device as a backlight.

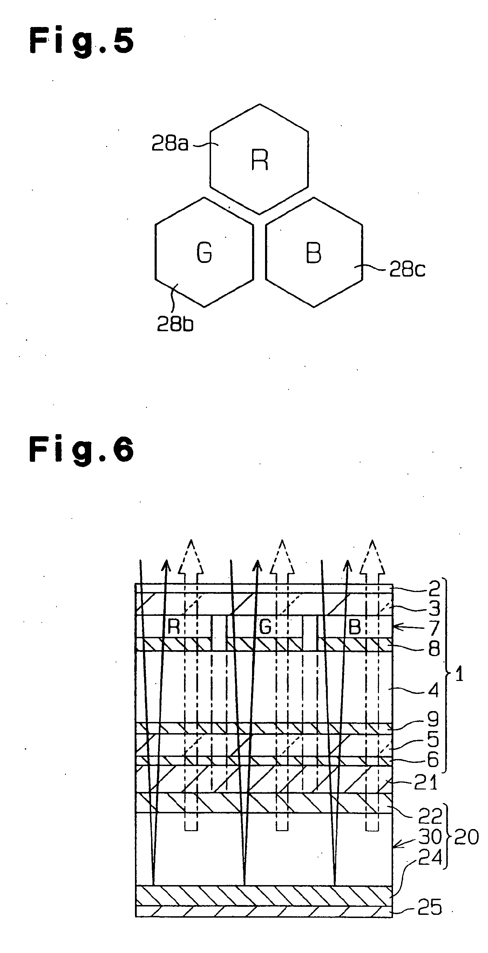

As shown in Fig. 6, a transmissive liquid crystal display unit has been proposed that employs an organic electroluminescent device 20, which is located behind a liquid crystal panel 1, as a backlight. The organic electroluminescent device 20 includes a data electrode 22, a reflective electrode 24, and an organic electroluminescent layer 30. The organic electroluminescent layer 30 is sandwiched between the data electrode 22 and the reflective electrode 24. The organic electroluminescent layer 30 has a transmissive mode, in which white light is emitted toward the liquid crystal panel 1 when voltage is applied to the data electrode 22 and the reflective electrode 24; and a reflective mode, in which voltage is not applied and no light is emitted. In the transmissive mode, light that is emitted from the organic electroluminescent layer 30 passes through a color filter 7 of the liquid crystal panel 1 to display a desired color. In the reflective mode, the reflective electrode 24 of the organic electroluminescent device 20 is used as a reflective mirror. The incident light that passes through the liquid crystal panel 1 is reflected by the reflective electrode 24 and passes through the color filter 7 to display a desired color.

In the reflective mode, light passes through the color filter 7 of the liquid crystal panel 1 twice, that is when entering into the display and when going out of the display after being reflected. However, in the transmissive mode, white light that is emitted from the organic electroluminescent layer 30 passes through the color filter 7 only once. Therefore, color is not rich enough in the transmissive mode.

### SUMMARY OF THE INVENTION

Accordingly, it is an objective of the present invention is to provide a transmissive liquid crystal display unit that presents rich colors.

To achieve the above objective, the present invention provides a liquid crystal display unit, which includes a liquid crystal panel, color filter members, and an organic electroluminescent device. The liquid crystal panel has a plurality of sub-pixels. The color filter members have different colors for displaying a color image. Each color filter member is located at a position corresponding to at least one of the sub-pixels. The organic electroluminescent device is located behind the liquid crystal panel and functions as a backlight. The organic electroluminescent device has a plurality of organic electroluminescent bodies. Each organic electroluminescent body is located opposite to a corresponding color filter member that has the same color as the color of light emitted from the organic electroluminescent body. Each organic electroluminescent body emits light toward the corresponding color filter member.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is an exploded partial perspective view illustrating a transmissive liquid crystal display unit according to a first embodiment of the present invention;
Fig. 2 is a schematic view illustrating the transmissive liquid crystal display unit of the first embodiment;
Fig. 3 is a schematic view illustrating a transmissive liquid crystal display unit according to a second embodiment of the present invention;
Fig. 4 is an exploded partial perspective view illustrating the transmissive liquid crystal display unit according to the second embodiment;
Fig. 5 is a schematic view illustrating organic electroluminescent members according to a modified embodiment; and
Fig. 6 is a schematic view illustrating a prior art transmissive liquid crystal display unit.

### DETAILED DESCRIPTION OF THE PREFERRED EMBODIMENTS

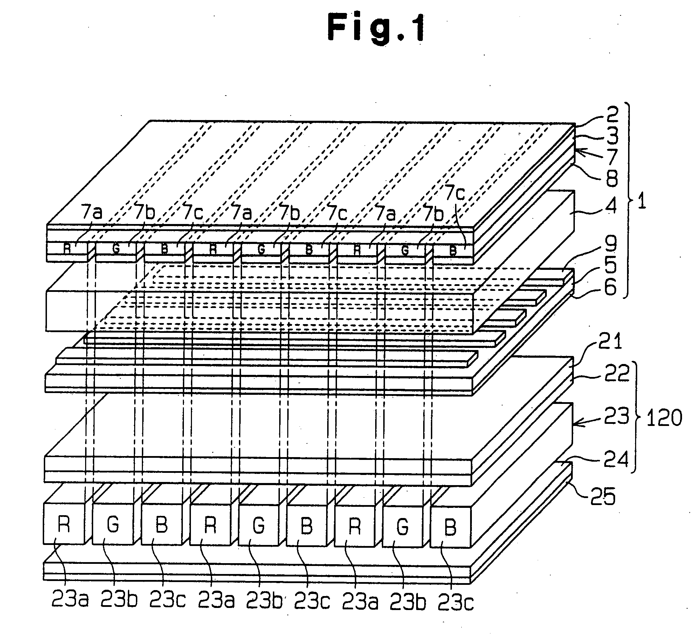

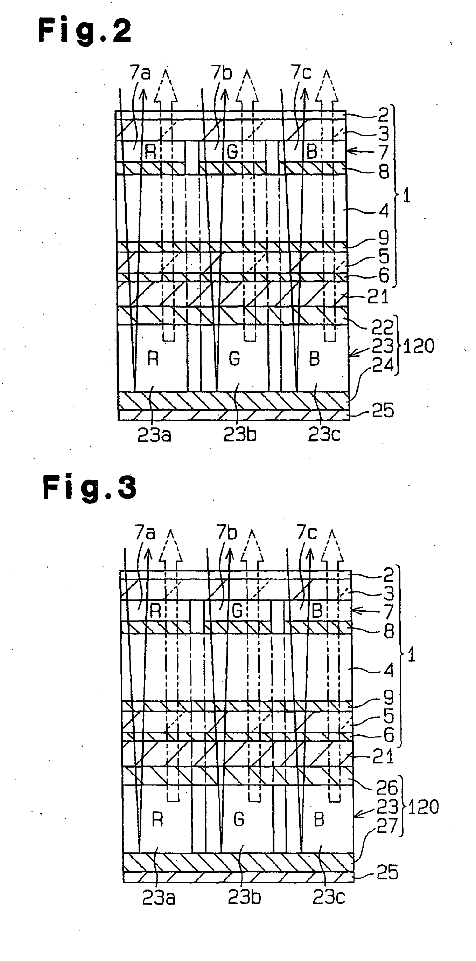

A transmissive liquid crystal display unit according to a first embodiment of the present invention will now be described with reference to Figs. 1 and 2. In Figs. 1 and 2, the upper side is referred to as a front side (display side or light emitting direction) and the lower side is referred to as a rear side (non-display side or back side). The relative size and thickness of components shown in Figs. 1 and 2 are different from the actual size and thickness. A transmissive liquid crystal panel 1 of the first embodiment is passive matrix type.

As shown in Fig. 1, the liquid crystal display unit includes the transmissive liquid crystal panel (hereinafter, referred to as a liquid crystal panel) 1 and a backlight, which is located on the opposite side of a display surface of the liquid crystal panel 1. The backlight is formed by an organic electroluminescent device 120.

The liquid crystal panel 1 is formed by laminating a first deflection plate 2, a first substrate 3, a liquid crystal 4, a second substrate 5, and a second deflection plate 6 in this order from the front side.

A color filter 7 is formed on the rear side of the first substrate 3. The color filter 7 includes first to third color filter members 7a, 7b, and 7c, which are parallel to each other. The first color filter members 7a are R (red), the second color filter members 7b are G (green), and the third color filter members 7c are B (blue). Transparent data electrodes 8 are laminated on the first to third color filter members 7a, 7b, and 7c, and the liquid crystal 4 and are arranged parallel to each other. Scanning electrodes 9 are located between the second substrate 5 and the liquid crystal 4, and extend perpendicular to the data electrodes 8. Intersections between the data electrodes 8 and the scanning electrodes 9 correspond to sub-pixels. Therefore, the sub-pixels are arranged in a matrix. Each of the first to third color filter members 7a, 7b, and 7c corresponds to the sub-pixels located along the first to third color filter members 7a, 7b, or 7c. The substrates 3, 5 may be formed by any material as long as the material is transparent or translucent (preferably transparent). The substrates 3, 5 are, for example, made of glass. The data electrodes 8 and the scanning electrodes 9 may also be formed of any material as long as the material is transparent or translucent (preferably transparent). The data electrodes 8 and the scanning electrodes 9 are, for example, made of indium tin oxide (ITO). The first substrate 3, on which the color filter 7 and the data electrodes 8 are formed, may be adhered to the second substrate 5, on which the liquid crystal 4 and the scanning electrodes 9 are formed, with sealing material, which is not shown.

The organic electroluminescent device 120 has substantially the same area as the liquid crystal panel 1. The organic electroluminescent device 120 is made by laminating a third substrate 21, a data electrode 22, an organic electroluminescent layer 23, a reflective electrode 24, and a fourth substrate 25 in this order. The third substrate 21 and the fourth substrate 25 are sealed by sealing material (not shown), such as epoxy resin, to prevent moisture and oxygen from entering the organic electroluminescent layer 23 from the outside. The organic electroluminescent layer 23 is formed of first to third organic electroluminescent bodies 23a, 23b, and 23c, which are controlled to illuminate simultaneously. The first organic electroluminescent body 23a is R(red), the second organic electroluminescent body 23b is G(green), and the third organic electroluminescent body 23c is B(blue). The organic electroluminescent layer 23 is formed of known material. For example, the organic electroluminescent layer 23 is formed by a hole injection layer, a hole transport layer, an electroluminescent layer, an electron transport layer, and an electron injection layer. The first to third organic electroluminescent bodies 23a, 23b, and 23c extend parallel to the first to third color filter members 7a, 7b, and 7c. The width of each first to third organic electroluminescent bodies 23a, 23b, or 23c is the same as the width of each first to third color filter member 7a, 7b, or 7c. Each first to third color filter member 7a, 7b, or 7c transmits the same color as the light emitted from the corresponding first to third organic electroluminescent body 23a, 23b, or 23c. That is, each first to third color filter member 7a, 7b, or 7c is arranged to face the corresponding first to third organic electroluminescent body 23a, 23b, or 23c in the light transmission direction.

One sheet of flat reflective electrode 24 is formed on the front side of the fourth substrate 25. The reflective electrode 24 is a metallic electrode and is made of, for example, aluminum.

The operations of the above mentioned transmissive liquid crystal display unit will now be described.

When voltage is applied to the data electrodes 8 and the scanning electrodes 9 by a drive control device, which is not shown, the sub-pixels located at the intersections between the excited data electrodes 8 and the excited scanning electrodes 9 of the liquid crystal panel 1 transmit light.

In the organic electroluminescent device 120, when voltage is applied to the data electrode 22 and the reflective electrode 24, the first to third organic electroluminescent bodies 23a, 23b, and 23c emit light simultaneously. As shown by a chain double-dashed line in Fig. 2, the emitted light is transmitted to the liquid crystal panel 1 through the data electrode 22 and the third substrate 21 directly or after being reflected by the reflective electrode 24. The light that reached the liquid crystal panel 1 passes through the sub-pixels that are in a transmissive state by the applied voltage. The first to third color filter members 7a, 7b, and 7c are located on the display side of the liquid crystal panel 1 so that each of the first to third color filter members 7a, 7b, and 7c is arranged opposite to the corresponding first to third organic electroluminescent body 23a, 23b, or 23c that has the same color. Therefore, light emitted from the first organic electroluminescent body 23a passes through the first color filter member 7a, light emitted from the second organic electroluminescent body 23b passes through the second color filter member 7b, and light emitted from the third organic electroluminescent body 23c passes through the third color member filter 7c, respectively. Thus, the first embodiment differs from the conventional organic electroluminescent layer (see Fig. 6) that emits white light in that although light passes through the color filter 7 only once, rich color can be obtained.

When electricity is not supplied, the organic electroluminescent device 120 is in a reflective mode and does not emit light. At a bright place, an image displayed by the liquid crystal panel 1 is reliably visible since the outside light is reflected by the reflective electrode 24. That is, as shown in Fig. 2, outside light passes through the color filter 7 when entering and then reflected by the reflective electrode 24 of the organic electroluminescent device 120. The reflected light passes through the color filter 7 again. For example, incident light passing through the first color filter member 7a passes through the first color filter member 7a again after being reflected by the reflective electrode 24. In the same manner, incoming light transmitted through the second filter member 7b or the third filter member 7c passes through the color filter member 7b or 7c again after being reflected by the reflective electrode 24. That is, the incident light passes through the same color filter 7 twice. Thus, rich color is obtained even in bright light.

Light that passes through the sub-pixels that are in the transmissive state among the light that is emitted from the organic electroluminescent layer 23 of the organic electroluminescent device 120 and reached the liquid crystal panel 1 is output on the front side of the liquid crystal panel 1. The light transmitted through each sub-pixel passes through the corresponding one of the first to third color filter members 7a, 7b, and 7c. Then, the three colors of light of the sub-pixels are combined to obtain a desired color of one pixel.

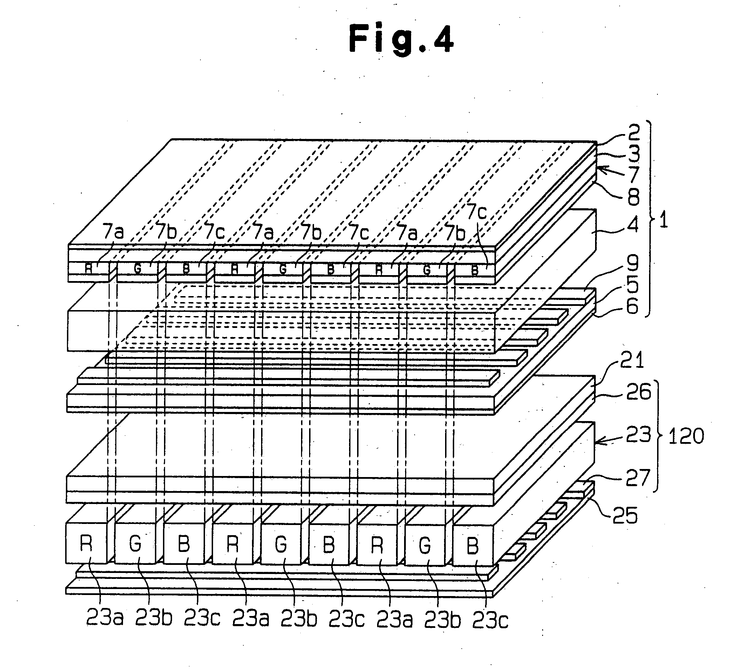

The first embodiment provides the following advantages.
(1) The organic electroluminescent layer 23 is separated into the first to third organic electroluminescent bodies 23a, 23b, and 23c, which emit the same colors (R, G, B) as the first to third color filter members 7a, 7b, and 7c, respectively. Each of the first to third organic electroluminescent bodies 23a, 23b, and 23c is arranged to face the corresponding one of the first to third color filter members 7a, 7b, and 7c that transmits the same color of light as the color of light emitted from the first to third organic electroluminescent body 23a, 23b, or 23c in the light transmission direction (the light output direction). Therefore, in the reflective mode, the incident light passes through the color filter 7 twice in the same manner as the conventional liquid crystal display unit. In the transmissive mode, light emitted from each of the first to third organic electroluminescent bodies 23a, 23b, and 23c passes through the corresponding one of the first to third color filter members 7a, 7b, and 7c that has the same color. Therefore, rich color is also obtained in the transmissive mode.
(2) The first to third organic electroluminescent bodies 23a, 23b, and 23c are controlled to emit light simultaneously. This simplifies a control to emit light as the backlight.
   A transmissive liquid crystal display unit according to a second embodiment will now be described with reference to Figs. 3 and 4. The transmissive liquid crystal display employs a line-sequential drive system as an electrode drive system of an organic electroluminescent device. The differences from the first embodiment will mainly be discussed below. In the second embodiment, the light emission of the organic electroluminescent device 120 is performed in synchronization with scanning of the liquid crystal 4.
   As shown in Fig. 3, the organic electroluminescent device 120 is formed of a data electrode 26, the organic electroluminescent layer 23, and reflective electrodes 27. The data electrode 26 is tabular and formed on the rear side of the third substrate 21.
   The reflective electrodes 27 are arranged parallel to each other so that the reflective electrodes 27 are aligned with the scanning electrodes 9 in the vertical direction. The reflective electrodes 27 are driven in synchronization with the scanning electrodes 9 of the liquid crystal panel 1. Therefore, only the sub-pixels of the organic electroluminescent device 120 located directly below the sub-pixels of the liquid crystal panel 1 to which the voltage is applied are illuminated. In other words, each scanning electrode 9 partially corresponds to each of the organic electroluminescent bodies 23a to 23c. When voltage is applied to any of the scanning electrodes 9, parts of the organic electroluminescent bodies 23a to 23c that correspond to the excited scanning electrode 9 emit light.
   The second embodiment provides the following advantages in addition to the advantage (1) of the first embodiment.
(3) Since only the required portions of the first to third organic electroluminescent bodies 23a, 23b, and 23c, which form the organic electroluminescent device 120, are controlled to emit light, more energy is saved.

It should be apparent to those skilled in the art that the present invention may be embodied in many other specific forms without departing from the spirit or scope of the invention. Particularly, it should be understood that the invention may be embodied in the following forms.

In the first embodiment, the liquid crystal panel 1 need not employ a passive matrix system but may employ an active matrix system.

In the second embodiment, the organic electroluminescent device 120, which is used as the backlight, need not employ a line-sequential drive system but may employ an active matrix system. In this case also, the organic electroluminescent device 120 may be controlled to emit light in synchronization with scanning of the liquid crystal panel 1.

In the first and second embodiments, the first to third organic electroluminescent bodies 23a, 23b, and 23c need not be arranged in stripe but may have a delta structure in which first to third electroluminescent members 28a, 28b, and 28c are arranged in a honeycomb structure as shown in Fig. 5. In this case, the color filter 7 also has a delta structure identical to the first to third electroluminescent members 28a, 28b, and 28c. The first to third electroluminescent members 28a, 28b, and 28c are arranged to face parts of the color filter 7 that transmit the same color of light in the light transmission direction (the light output direction). Accordingly, the modified embodiment provides the same advantage as the above embodiments. In this case, the color filter 7 corresponds to one sub-pixel.

In the above embodiments, the first to third color filter members 7a, 7b, and 7c and the first to third organic electroluminescent bodies 23a, 23b, and 23c need not have the same shape and need not extend parallel to each other forming a stripe. The first to third color filter members 7a, 7b, and 7c may have slightly greater area than the first to third organic electroluminescent bodies 23a, 23b, and 23c as viewed from the display side. In this case also, substantially the entire light emitted from each of the first to third organic electroluminescent bodies 23a, 23b, and 23c passes through the corresponding one of the first to third color filter members 7 having the same color. On the contrary, first to third color filter members 7a, 7b, and 7c may be slightly smaller than the first to third organic electroluminescent bodies 23a, 23b, and 23c as viewed from the display side. In this case, light might leak to the adjacent color filter. However, since the leaked light is blocked by the adjacent color filter, rich color is obtained.

In the above embodiments, the organic electroluminescent device 120 need not be sealed by a sealing member, which is not shown. However, the organic electroluminescent device 120 may be sealed by a passivation film.

In the above embodiments, electrode material used for the reflective electrodes 24, 27 may be other than aluminum, such as chrome, nickel, or silver.

In the above embodiments, the present invention is applied to a transflective liquid crystal display unit, which has a transmissive mode and a reflective mode, as a transmissive liquid crystal display unit. However, the present invention may be applied to a transmissive liquid crystal display unit, which has only a transmissive mode.

The present examples and embodiments are to be considered as illustrative and not restrictive and the invention is not to be limited to the details given herein, but may be modified within the scope and equivalence of the appended claims.

A liquid crystal display unit has a liquid crystal panel, a plurality of color filter members and an organic electroluminescent device. The liquid crystal panel has a plurality of sub-pixels. The color filter members have different colors for displaying a color image. Each color filter member is located at a position corresponding to at least one of the sub-pixels. The organic electroluminescent device is located behind the liquid crystal panel. The organic electroluminescent device has a plurality of organic electroluminescent bodies. Each organic electroluminescent body is located opposite to a corresponding color filter member that has the same color as the color of light emitted from the organic electroluminescent body. Each organic electroluminescent body emits light toward the corresponding color filter member.

## Claims

1. A liquid crystal display unit has a liquid crystal panel, wherein the liquid crystal panel has a plurality of sub-pixels, a plurality of color filter members having different colors for displaying a color image, wherein each color filter member is located at a position corresponding to at least one of the sub-pixels, an organic electroluminescent device located behind the liquid crystal panel, wherein the organic electroluminescent device functions as a backlight, wherein the organic electroluminescent device has a plurality of organic electroluminescent bodies, wherein each organic electroluminescent body is located opposite to a corresponding color filter member that has the same color as the color of light emitted from the organic electroluminescent body, the liquid crystal display unit being **characterized in that**:
each organic electroluminescent body emits light toward the corresponding color filter member.

2. The liquid crystal display unit according to claim 1, **characterized in that** the color filter members are arranged parallel to each other, wherein the organic electroluminescent bodies extend parallel to each other, and wherein each organic electroluminescent body extends parallel to the corresponding color filter member.

3. The liquid crystal display unit according to claims 1 or 2, **characterized in that** the organic electroluminescent device is designed so that the organic electroluminescent bodies emit light simultaneously.

4. The liquid crystal display unit according to claim 3, **characterized in that** the organic electroluminescent device includes a pair of electrodes, wherein the pair of electrodes sandwiches the organic electroluminescent bodies, and wherein, when voltage is applied to the pair of electrodes, all of the organic electroluminescent bodies emit light simultaneously.

5. The liquid crystal display unit according to any one of claims 1 to 4, **characterized in that** the organic electroluminescent device is driven by a line-sequential drive system.

6. The liquid crystal display unit according to claim 5, **characterized in that** the liquid crystal panel has a plurality of scanning electrodes, wherein the scanning electrodes extend parallel to each other, wherein each scanning electrode partially corresponds to each of the organic electroluminescent bodies, and wherein, when voltage is applied to any of the scanning electrodes, parts of the organic electroluminescent bodies that correspond to the excited scanning electrodes emit light.

7. The liquid crystal display unit according to any one of claims 1 or 6, **characterized in that** the organic electroluminescent device has a reflective electrode, wherein the reflective electrode is located on the opposite side of the liquid crystal panel with respect to the organic electroluminescent bodies, and wherein the reflective electrode reflects light that enters through the liquid crystal panel toward the liquid crystal panel.

8. The liquid crystal display unit according to any one of claims 1 or 7, **characterized in that** each organic electroluminescent body coincides in shape with the color filter member that corresponds to the organic electroluminescent body in a light output direction.
